# EUROPÄISCHE PATENTANMELDUNG

(11) **EP 4 799 770 A1**
(43) Veröffentlichungstag der Anmeldung: **02.09.2026**
(21) Anmeldenummer: 25160170.4
(22) Anmeldetag: 26.02.2025
(51) Int. Cl.: B25J 9/16, B25J 9/00

(54) **HANDHABUNGSVORRICHTUNG UND VERFAHREN ZUM HANDHHABEN ZUMINDEST EINES ZIELSTÜCKGUTS**

(71) Anmelder: Körber Supply Chain Logistics GmbH, 78467 Konstanz (DE)
(72) Erfinder: Fischer, Marco, 78467 Konstanz (DE); Eisser, Dirk-Udo, 78479 Reichenau (DE); Skrdlant, Rolf-Peter, 88662 Überlingen (DE); Schulze, Oliver, 88662 Überlingen (DE); Huber, Richard, 78467 Konstanz (DE)
(74) Vertreter: Müller Schupfner & Partner Patent- und Rechtsanwaltspartnerschaft mbB (Muc)

(57) **Zusammenfassung**

Es wird eine Handhabungsvorrichtung (1) zum Entnehmen zumindest eines Zielstückguts (2) aus einem Stückgutstrom (3) bereitgestellt. Die Handhabungsvorrichtung (1) umfasst ein Funktionsende (5), das dazu ausgestaltet ist, in einem Greifbereich zumindest ein Zielstückgut (2) zu greifen, wobei das Funktionsende (5) zwischen einer Ruheposition und einer Greifposition verlagerbar ist, wobei in der Greifposition das zumindest eine Zielstückgut (2) gegriffen werden kann, eine Sensorvorrichtung (6), die dazu ausgestaltet ist, Stückgutstrominformationen des Stückgutstroms (3) zu erlangen oder zu erfassen, eine Steuereinheit (8), die dazu ausgestaltet ist, einen Verlagerungsweg (7) des Funktionsendes (5) in Abhängigkeit der Stückgutstrominformationen zu bestimmen. Ferner wird ein Handhabungssystem (10) zum Handhaben von Stückgütern und ein Verfahren zum Entnehmen zumindest eines Zielstückguts (2) aus einem Stückgutstrom (3) bereitgestellt.

## Beschreibung

Die vorliegende Offenbarung betrifft eine Handhabungsvorrichtung zum Handhaben eines Zielstückguts, insbesondere zum Entnehmen zumindest eines Zielstückgut aus einem Stückgutstrom, sowie ein Verfahren zum Entnehmen zumindest eines Zielstückguts aus einem Stückgutstrom.

Um Stückgüter aus Stückgutströmen herauszunehmen, kann eine Handhabungsvorrichtung wie beispielsweise ein Roboter verwendet werden. Die Stückgutströme können sich hierbei bewegen, insbesondere auf einem Förderband. Zielstückgüter können gezielt aus dem Stückgutstrom entnommen werden. Bei der Anfahrt der Handhabungsvorrichtung auf ein Zielstückgut müssen Kollisionen mit anderen Stückgütern oder mit anderen in der Umgebung befindlichen Gegenständen vermieden werden. Insbesondere bei inhomogenen Stückgütern in einem Stückgutstrom können unterschiedlich große Stückgüter vorliegen. Daher wird, um Kollisionen zu vermeiden, ein sicherer Anfahrtsweg der Handhabungsvorrichtung gewählt, indem beispielsweise ein großer Bogen gefahren wird und das Zielstückgut stets von oben angefahren wird. Dies ist jedoch ineffizient, da ein Greifvorgang länger dauert und eine größere räumliche Verlagerung der Handhabungsvorrichtung notwendig ist.

Daher ist es eine Aufgabe der vorliegenden Erfindung, eine Handhabungsvorrichtung zum Entnehmen zumindest eines Zielstückguts aus einem Stückgutstrom bereitzustellen, bei der der Handhabungsprozess beschleunigt ist und Kollisionen vermieden werden.

Der Gegenstand der vorliegenden Offenbarung löst dieses Problem mit einer Handhabungsvorrichtung mit den Merkmalen des Anspruchs 1 sowie mit einem Verfahren mit dem Merkmal des Anspruchs 15.

Gemäß einem Aspekt der vorliegenden Offenbarung wird eine Handhabungsvorrichtung zum Handhaben eines Zielstückguts, insbesondere zum Entnehmen zumindest eines Zielstückguts aus einem Stückgutstrom, bereitgestellt. Die Handhabungsvorrichtung kann ein Funktionsende umfassen, das dazu ausgestaltet ist, in einem Greifbereich zumindest ein Zielstückgut zu greifen. Das Funktionsende kann zwischen einer Ruheposition und einer Greifposition verlagerbar sein. In der Greifposition kann das zumindest eine Zielstückgut gegriffen werden. Die Handhabungsvorrichtung kann eine Sensorvorrichtung umfassen, die dazu ausgestaltet ist, Stückgutinformationen des Stückgutstroms zu erlangen oder zu erfassen. Die Handhabungsvorrichtung kann eine Steuereinheit umfassen, die dazu ausgestaltet ist, einen Verlagerungsweg des Funktionsendes in Abhängigkeit der Stückgutinformationen zu bestimmen.

Gegenüber dem bekannten Stand der Technik liefert der Gegenstand der vorliegenden Offenbarung den Vorteil, dass ein Verlagerungsweg des Funktionsendes individuell basierend auf dem Stückgutstrom bestimmt wird. Dadurch können unnötig lange Wege vermieden werden. Mit anderen Worten kann der Verlagerungsweg optimiert werden, um unnötige oder unnötig weitere Wege zu vermeiden. Beispielsweise kann bei Stückgütern eines Stückgutstroms, die ein sehr geringes Hindernis darstellen, ein Fahrweg zwischen der Ruheposition und der Greifposition direkt gewählt werden (d.h. ohne dass ein Bogen gefahren wird). Dadurch ist es möglich, die Handhabungsseiten zu verringern. Ferner ist durch Berücksichtigung der Stückgutinformationen eine Anfahrt des Funktionsendes in die Greifposition nicht zwingend senkrecht von oben notwendig, sondern kann auch seitlich oder schräg realisiert sein. Dadurch ist es möglich, weitere Zeit einzusparen.

Eine Handhabungsvorrichtung kann eine Vorrichtung sein, die dazu ausgestaltet ist, Stückgüter zu handhaben. Handhaben kann in diesem Zusammenhang bedeuten, dass Stückgüter physisch im Raum bewegt werden. Beispielsweise kann die Handhabungsvorrichtung ein Roboterarm sein. Die Handhabungsvorrichtung kann ein SCARA-Roboter sein. Die Handhabungsvorrichtung kann dazu ausgestaltet sein, Stückgüter einzeln zu greifen. Die Handhabungsvorrichtung kann dazu ausgestaltet sein, Stückgüter einzeln zu verlagern. Dabei kann das Zielstückgut aus dem Stückgutstrom entnommen werden. Ferner kann das Zielstückgut in einen Stückgutstrom eingebracht werden. Ferner kann das Zielstückgut auch innerhalb des Stückgutstroms verlagert werden. Die Stückgüter können beispielsweise Postsendungen umfassen. Insbesondere können die Stückgüter Pakete, Päckchen, Smalls, Polybags, Versandtaschen, Versandrollen und dergleichen umfassen. Ein Stückgutstrom kann eine Vielzahl von Stückgütern sein, die gemeinsam in einer Transportrichtung bewegt werden. Mit anderen Worten kann der Stückgutstrom einer Handhabungsvorrichtung zugeführt oder daran vorbeigeführt werden. Der Stückgutstrom kann bedeuten, dass Stückgüter in Bewegung sind. Mit anderen Worten kann sich ein Stückgutstrom, welcher in einem Greifbereich der Handhabungsvorrichtung vorliegt, dynamisch und transient ändern (z.B. bewegen und/oder umlagern). Die Greifvorrichtung kann einen Aktionsradius haben, in welchem sie Stückgüter greifen kann. Dieser Aktionsradius kann als Greifbereich definiert sein. Beispielsweise kann der Greifbereich um die Handhabungsvorrichtung herum oder nur an einer Seite der Handhabungsvorrichtung vorgesehen sein. Mit anderen Worten kann die Greifvorrichtung Stückgüter in dem Greifbereich erreichen und handhaben. Stückgüter außerhalb des Greifbereich kann die Handhabungsvorrichtung nicht erreichen. Der Stückgutstrom kann so verlaufen, dass er durch den Greifbereich der Handhabungsvorrichtung verläuft. Die Handhabungsvorrichtung kann ein Funktionsende umfassen, das dazu ausgestaltet ist, ein Stückgut aufzugreifen (ein Beispiel eines Handhabens). Ferner kann die Handhabungsvorrichtung ein Stückgut auch innerhalb des Stückgutstroms verlagern (d.h. beispielsweise aufnehmen und ein anderen Stelle ablegen). Das Funktionsende kann ein pneumatisches oder mechanisches Funktionsende sein, welches dazu ausgestaltet ist, ein Stückgut zu handhaben. Beispielsweise kann das Funktionsende einen Sauggreifer umfassen. Zusätzlich oder alternativ kann das Funktionsende einen mechanischen Greifer umfassen. Das Funktionsende kann auch als Endeffektor bezeichnet sein. In dem Fall, bei dem die Handhabungsvorrichtung ein Roboterarm ist, kann das Funktionsende an einem Außenende des Roboterarms beweglich angeordnet sein. Ein Zielstückgut kann ein Stückgut der Vielzahl von Stückgütern aus einem Zielstückgutstrom sein. Das Zielstückgut kann ein Stückgut sein, welches durch die Handhabungsvorrichtung gehandhabt werden soll. Die Ruheposition des Funktionsendes kann eine Position sein, bei der das Funktionsende kein Stückgut greifen kann. Ferner kann die Ruheposition so angeordnet sein, dass das Funktionsende den Stückgutstrom nicht behindert oder stört. Die Greifposition kann eine Position sein, in der das Funktionsende ein Stückgut greifen kann. Beispielsweise kann die Greifposition also unmittelbar angrenzend an ein Zielstückgut sein, sodass bei einer Aktivierung des Funktionsendes des Zielstückguts gegriffen werden kann. Ferner kann das Funktionsende in der Greifposition mit dem Zielstückgut in direktem Kontakt sein. Gegriffen kann in diesem Zusammenhang bedeuten, dass das Zielstückgut zusammen mit dem Funktionsende bewegt werden kann. Beispielsweise kann die Greifposition eine Position sein, bei dem ein gegebenenfalls vorgesehener Saugnapf des Funktionsendes so nah an dem Zielstückgut angeordnet ist, das durch Anlegen eines Unterdrucks an dem Saugnapf das Zielstückgut an dem Funktionsende gehalten werden kann. Die Sensorvorrichtung kann Stückgutstrominformationen des Stückgutstroms erfassen. Stückgutstrominformationen können dabei Informationen und/oder Daten sein, die indikativ dafür sein können, wie der Stückgutstrom ausgestaltet ist. Beispielsweise können die Stückgutstrominformationen indikativ dafür sein, wie groß oder welche Dimensionen Stückgüter des Stückgutstroms haben. Dadurch kann erfasst werden, welchen Raumbedarf der Stückgutstrom hat, wenn er durch den Greifbereich der Handhabungsvorrichtung verläuft. Somit kann definiert werden, wo das Funktionsende im Raum positioniert werden kann, ohne dass es zur Kollision mit dem Stückgutstrom kommt. Die Sensorvorrichtung kann dabei eine Vorrichtung sein, die dazu ausgestaltet ist, Rauminformationen über den Stückgutstrom zu sammeln. Die Sensorvorrichtung kann beispielsweise eine optische Erfassungseinheit umfassen. Ferner kann die Sensorvorrichtung eine Abtastvorrichtung sein, die die Umrisse des Stückgutstroms abtasten kann und somit eine Art Landkarte des Stückgutstroms erstellen kann. Die Sendervorrichtung kann dazu ausgestaltet sein, die Stückgutstrominformationen fortlaufend in Echtzeit oder in Intervallen zu erfassen. Dadurch können die Stückgutstrominformationen auch bei sich rasch änderndem Stückgutstrom bestimmt werden. Die Steuereinheit kann eine computerähnliche Vorrichtung sein, die dazu ausgestaltet ist, Daten aufzunehmen, Daten zu verarbeiten und Steuerbefehle auszugeben. Die Steuereinheit kann die Stückgutstrominformationen aufnehmen und auswerten. Mit anderen Worten kann die Steuereinheit räumliche Eigenschaften des Stückgutstroms aufnehmen und bestimmen, in welchen Bereichen das Funktionsende angeordnet werden kann, ohne, dass es zu Problemen mit dem Stückgutstrom kommt. Der Verlagerungsweg kann hierbei indikativ für eine räumliche Position des Funktionsendes im Raum sein. Ferner kann der Verlagerungsweg der Weg zwischen der Ruheposition und der Greifposition sein. Ferner kann der Verlagerungsweg auch indikativ für eine Ruheposition und/oder eine Greifposition sein. Durch die Handhabungsvorrichtung kann also ein individuell angepasster Greifvorgang definiert sein, der unter Berücksichtigung des Stückgutstroms ein Zielstückgut greifen kann.

Optional kann der Stückgutstrom auf einer Fördereinrichtung (z.B.: Förderband) transportiert werden. Die Fördereinrichtung kann basierend auf den Stückgutstrominformationen des Stückgutstroms gesteuert werden. Somit kann sowohl die Handhabungsvorrichtung also auch die Fördervorrichtung so gesteuert werden, dass ein Handhaben des Zielstückguts möglich ist. Somit kann die Fördereinrichtung beispielsweise verlangsamt werden, wenn ein Griff nur dann sicher möglich ist. Ferner kann die Fördereinrichtung auch beschleunigt werden, um ein Zielstückgut schnell in den Handhabungsbereich der Handhabungsvorrichtung zu fördern. Die Kommunikation zwischen der Steuereinheit und der Fördereinrichtung kann beispielsweise über eine Schnittstelle realisiert sein. Somit kann die Steuereinheit sowohl die Handhabungsvorrichtung als auch die Fördereinrichtung steuern.

Optional kann die Steuereinheit dazu ausgestaltet sein, die Ruheposition auf Basis der Stückgutinformation zu bestimmen. Eine Ruheposition kann diejenige Position sein, in der das Funktionsende nicht im Bewegung ist. Mit anderen Worten kann die Ruheposition eine "Default-Position" der Handhabungsvorrichtung bzw. des Funktionsendes sein. In der Ruheposition kann das Funktionsende kein Stückgut greifen. Die Ruheposition kann ferner eine Ausgangsposition sein, aus welcher die Greifposition angefahren wird. Daher kann es vorteilhaft sein, wenn die Ruheposition in räumlicher Nähe zu der Greifposition verläuft. Die Ruheposition kann diejenige Position sein, in der das Funktionsende darauf wartet, das nächste Zielstückgut anzufahren. In der Ruheposition muss jedoch berücksichtigt werden, dass das Funktionsende nicht mit Stückgütern, die in dem Stückgutstrom transportiert werden, kollidiert. Im Stand der Technik ist die Ruheposition oft in jedem Fall soweit von einer theoretischen Greifposition entfernt, dass es nicht zu Interferenzen zwischen Stückgütern und der Handhabungsvorrichtung kommt. Ist der Stückgutstrom jedoch so dimensioniert, dass in dessen Nähe bereits eine mögliche Ruheposition gegeben ist, wird das im Stand der Technik nicht berücksichtigt. Durch Berücksichtigung der Stückgutstrominformationen der vorliegenden Steuereinheit, kann die Ruheposition so gewählt werden, dass die Greifposition effizient zu erreichen ist (z.B. durch Verringerung eines Weges). Dadurch können Greifzeiten reduziert werden und die Effizienz der Vorrichtung gesteigert sein.

Optional ist die Sensorvorrichtung dazu ausgestaltet, Zielstückgutinformation zu erlangen oder zu erfassen, und vorzugsweise ist die Steuereinheit dazu ausgestaltet, den Verlagerungsweg des Funktionsendes in Abhängigkeit der Zielstückgutinformation und/oder Stückgutstrominformation zu bestimmen. Der Verlagerungsweg kann hierbei ein Weg sein, den das Funktionsende zwischen der Ruheposition und der Greifposition und zwischen der Greifposition und der Ruheposition zurücklegt. Ferner kann der Verlagerungsweg ein Weg sein, den das Funktionsende zwischen der Greifposition und einer Abgabeposition oder vice versa zurücklegt. Hierbei kann der Verlagerungsweg auch nur einen der beiden Wege bezeichnen. Der Verlagerungsweg kann also der Verfahrweg des Funktionsendes während des Betriebs der Handhabungsvorrichtung sein. So kann der Verlagerungsweg individuell basierend auf den Stückgutstrominformationen bestimmt werden. So kann beispielsweise das Funktionsende näher an dem Stückgutstrom geführt werden, wenn der Stückgutstrom dies zulässt, da die darin geführte Stückgüter beispielsweise kleine Abmessungen aufweisen. Mit anderen Worten muss das Funktionsende nicht in einem großen Bogen zu dem Zielstückgut bewegt werden, sondern kann hier den kürzesten und damit schnellsten Weg beschreiten. Dadurch kann das Funktionsende schneller an dem Zielstückgut angelangen, um dieses zu greifen. So kann sich beispielsweise der Verlagerungsweg in zwei Fällen unterscheiden, wobei in beiden Fällen das Zielstückgut an exakt der gleichen Stelle angeordnet ist. Lediglich die umgebenden Stückgüter des Stückgutstroms können unterschiedlich angeordnet sein, sodass das Zielstückgut nicht auf dieselbe Art und Weise angefahren werden kann. Damit kann also der Zielstückgutstrom mitberücksichtigt werden, wenn die Handhabungsvorrichtung betätigt wird. Ist zusätzlich noch die Zielstückgutinformation verfügbar, kann auch eine Verlagerung des Funktionsendes von der Greifposition in die Ruheposition oder eine Abgabeposition individuell angepasst werden. So ist es beispielsweise bei einem großen Zielstückgut nötig, das Funktionsende entsprechend hoch über den Stückgutstrom zu heben, sodass ein Verlagern des an dem Funktionsende angebrachten Zielstückguts möglich ist, ohne, dass andere Stückgüter des Stückgutstroms beeinträchtigt oder kontaktiert werden. So kann es beispielsweise nötig sein, wenn das Zielstückgut entsprechend groß ist, einen großen Bogen über den Zielstückgutstrom zu fahren. Ist dagegen das Zielstückgut klein, kann das Funktionsende relativ nah an dem Stückgutstrom geführt werden. Dadurch kann die Effizienz der Vorrichtung gesteigert werden, da nicht jedes Mal ein großer Bogen gefahren werden muss, sondern angepasst an die Zielstückgutinformation und/oder die Stückgutstrominformation der Verlagerungsweg individuell bestimmt werden kann. Ein Abstand zwischen dem Funktionsende oder dem Zielstückgut, welches einem Funktionsende gehalten wird zu anderen Bauteilen oder anderen Stückgütern, kann als Sicherheitsabstand bezeichnet werden. Der Sicherheitsabstand kann basierend auf der Zielstückgutinformation und und/oder Stückgutstrominformation bestimmt werden.

Optional ist die Steuereinheit dazu ausgestaltet, den Verlagerungsweg des Funktionsende von der Ruheposition in die Greifposition in Abhängigkeit der Stückgutinformation und der Zielstückgutinformation zu bestimmen.

Optional ist die Steuereinheit dazu ausgestaltet, die Ruheposition so zu bestimmen, dass ein Verlagerungsweg zwischen der Ruheposition und der Greifposition minimal ist. Damit kann die Ruheposition so gewählt werden, dass ein möglichst effizienter und schneller Greifprozess vonstattengeht. Mit anderen Worten kann also ein individuelles Anfahren des Zielstückguts ermöglicht werden, ohne dass ein übermäßig großer Bogen oder Umweg gefahren wird, der nicht notwendig ist. Mit anderen Worten kann die Ruheposition auch in einem Bereich sein, in dem der Stückgutstrom vorhanden ist, jedoch bei dem aktuell vorliegenden Stückgutstrom mit keiner Behinderung des Funktionsende und/oder der Stückgüter des Stückgutstroms zu rechnen ist. Beispielsweise kann der Stückgutstrom auf einem Förderband transportiert werden. Normalerweise würde das Funktionsende außerhalb des Förderbereichs des Förderbands definiert sein. Durch die Berücksichtigung der Stückgutstrominformation kann der Ruhezustand jedoch auch im Bereich des Förderbands sein. Dadurch können beispielsweise Lücken in einem Förderstrom genutzt werden, um das Funktionsende so lange zu platzieren (d.h. unbewegt zu hakten), bis ein erneutes Anfahren eines Zielstückguts nötig wird. Dadurch kann die Vorrichtung insgesamt effizienter betrieben werden.

Optional ist die Steuereinheit dazu ausgestaltet, die Ruheposition so zu bestimmen, dass der Verlagerungsweg des Funktionsendes von der Ruheposition in die Greifposition in Abhängigkeit der Stückgutinformation und/oder der Zielstückgutinformation bestimmt werden. Dadurch kann ein individuell angepasster Verlagerungsweg erreicht werden.

Optional ist die Handhabungsvorrichtung dazu ausgestaltet, dass zumindest eine Zielstückgut von der Greifpositionen eine Zielposition zu verlagern. Die Zielposition kann die Ruheposition oder eine Abgabeposition sein. Dabei kann die Ruheposition mit der Abgabeposition übereinstimmen. Mit anderen Worten kann die Handhabungsvorrichtung dazu ausgestaltet sein, ein Stückgut zu greifen, und es zu halten. Während die Handhabungsvorrichtung (insbesondere das Funktionsende) das Zielstückgut an dem Funktionsende hält, kann sich das Funktionsende zu einer Zielposition verlagern. Dadurch kann das Zielstückgut physisch im Raum verlagert werden. Die Zielposition kann eine Endstelle oder eine andere Abgabestelle für das Zielstückgut sein. Beispielsweise kann die Zielposition eine Position über einen Behälter oder einer weiteren Fördereinrichtung sein. Somit kann das Zielstückgut aus dem Stückgutförderstrom entfernt werden und einer weiteren Handhabungsvorrichtung oder einer weiteren Behandlung zugeführt werden. Von der Zielposition kann das Funktionsende wieder in die Ruheposition verlagert werden oder direkt eine neue Greifposition anfahren. Für die Zielposition gelten soweit technisch sinnvoll dieselben Ausgestaltungen wie für die Ruheposition. Hilfsweise kann ein Verlagerungsweg von der Zielposition in eine darauf folgende Greifposition durch die oben genannten Maßnahmen angewendet werden. Dadurch kann eine Verlagerung von der Zielposition in eine Greifposition schnell und effizient realisiert sein. Genauer gesagt können bei der Verlagerung des Funktionsendes von der Zielposition in eine Greifposition die Zielstückgutinformationen und/oder die Stückgutstrominformationen genutzt werden, um den Verlagerungsweg individuell anzupassen.

Optional ist die Ruheposition variabel. Mit anderen Worten kann die Ruheposition veränderlich sein. Beispielsweise kann das Funktionsende in einer ersten Ruheposition sein und von dort in eine erste Greifposition verlagert werden. Nachdem in der ersten Greifposition ein Zielstückgut aufgenommen worden ist und einer Zielposition zugeführt worden ist, kann eine zweite Ruheposition eingenommen werden, die sich von der ersten Ruheposition unterscheidet. Dadurch kann die jeweilige Ruheposition (die beispielsweise auch die Zielposition sein kann) individuell bestimmt werden. Genauer gesagt kann die Ruheposition abhängig von den Stückgutstrominformationen bestimmt werden. Dadurch kann nach jedem abgeschlossenen Greifprozess eine optimale Ruheposition gefunden werden. Diese Ruheposition können sich untereinander unterscheiden.

Optional ist die Zielposition variabel. Die Zielposition kann diejenige Position des Funktionsendes sein, an welcher ein Zielstückgut von dem Funktionsende abgegeben wird. Diese Zielposition kann beispielsweise so gewählt sein, dass das Zielstückgut in eine bestimmte Endstelle überführt wird. Ferner kann die Zielposition eine Position sein, der das Zielstückgut abgegeben wird (beispielsweise kann dies eine weitere Fördervorrichtung, ein Speicher, ein Behälter oder dergleichen sein). Die Zielposition kann abhängig von den Zielstückgutinformationen sein. Dadurch kann abhängig von dem gegriffenen Stückgut die Zielposition variabel sein. So kann beispielsweise bei einem großen Zielstückgut die Zielposition so gewählt werden, dass das Zielstückgut möglichst beschädigungsfrei in sein Ziel befördert wird. Ist beispielsweise die Zielstückgutinformation indikativ für ein sehr empfindliches Zielstückgut, kann die Zielposition so gewählt werden, dass das Zielstückgut nur einen minimalen Weg in sein Ziel fällt. Ist dagegen das Zielstückgut widerstandsfähiger, kann eine größere Fallstrecke in Kauf genommen werden. Dadurch können Handhabungszeiten verringert werden und der Durchsatz der Handhabungsvorrichtung erhöht werden.

Optional umfassen die Stückgutstrominformation eine Position der Stückgüter des Stückgutstroms. Mit anderen Worten können die Stückgutstrominformationen eine Topographie der Stückgüter eine Stückgutstroms umfassen. Ferner können die Stückgutstrominformationen indikativ für ein 3D-Höhenprofil der Stückgüter eines Stückgutstroms sei. Dadurch können genaue Wege bestimmt werden, auf welchen sich das Funktionsende bewegen kann, ohne dass es zu Kollisionen zwischen Funktionsende und/oder daran gehaltenen Zielstückgütern kommt. Die Stückgutstrominformationen können darüber hinaus Informationen des Stückgutstroms umfassen, die stromaufwärts des Handhabungsbereichs liegen. Dadurch kann Zeit gewonnen werden, um zu bestimmen, wie das Funktionsende relativ zu dem Stückgutstrom bewegt werden kann, wenn ein bestimmtes Zielstückgut gegriffen werden soll.

Optional ist die Sensorvorrichtung dazu ausgestaltet, die Stückgüter des Stückgutstroms, insbesondere optisch, zu erkennen. Mit anderen Worten kann ein Vision-System eingesetzt werden, welches die Stückgutstrominformationen und/oder die Zielstückgutinformationen erlangen kann. Ferner kann die Sendervorrichtung dazu ausgestaltet sein, ein Zielstückgut zu identifizieren. Die Identifizierung eines Zielstückguts kann beispielsweise durch Erfassen von Zielstückgutinformationen realisiert sein. Die Zielstückgutinformationen können beispielsweise einen Empfänger, Abmessungen, Hinweise, welcher auf dem Zielstückgut angebracht sind, Form des Zielstückguts, Beschaffenheit des Zielstückguts und dergleichen umfassen. So können beispielsweise Stückgüter einer bestimmten Form (beispielsweise Versandrollen oder Polybags usw.) aus einem Stückgutstrom aussortiert werden. Ferner können beschädigte Stückgüter gezielt aussortiert werden. Darüber hinaus ist es denkbar, dass Stückgüter einer bestimmten Größe erkannt und aussortiert werden können. Die Sensorvorrichtung kann dabei bildbasiert realisiert sein. Ferner ist denkbar, dass ein LIDAR-Laser genutzt wird, um die Stückgutstrominformation zu erfassen. Hierbei können beispielsweise nur Polygone erfasst werden, um das Höhenprofil des Stückgutstroms zu bestimmen. Ferner kann eine Segmentierung aus Kontrast genutzt werden, um die Stückgutstrominformation zu erlangen. Hierbei kann in erster Linie bestimmt werden, welches Stückgut relativ zu einem anderen angeordnet ist. Insgesamt kann somit ein Höhenprofil der Stückgüter bestimmt werden. Darüber hinaus ist es denkbar, dass die Stückgutstrominformationen durch das Verfahren des "depth by focus" bestimmt werden. Hierbei werden verschiedene Brennweiten genutzt, um aus einem zweidimensionalen Bild eine Tiefeninformation zu erlangen. Dadurch kann mit einer herkömmlichen Kamera mit verstellbarem Fokus ein 3D-Höhenprofil des Zielstückgutstroms bestimmt werden. Ferner ist es denkbar, dass eine 2D-Ansicht des Stückgutstroms ausreicht, um zu erkennen, wo Stückgüter angeordnet sind. Diese Positionen können dann durch das Funktionsende umfahren werden, unabhängig davon wie hoch das Stückgut ist, um Kollisionen zwischen Funktionsende und Stückgut zu vermeiden. Dadurch kann eine einfachere Bestimmung der Stückgutstrominformationen erreicht werden. Somit können auch Handhabungsvorrichtungen mit geringerer Rechenleistung bereitgestellt sein. Ferner kann das Erlangen der Stückgutinformationen ein Klassifizieren umfassen, bei dem ein Klassifikation genutzt wird, um aus den erlangten Rohdaten Stückgutstrominformationen zu erlangen. Beispielsweise ist es denkbar, dass Rohdaten als Eingangsdaten einem Klassifikator zugeführt werden, und dieser Stückgutstrominformationen ausgibt. Die Klassifizierung kann beispielsweise auf Basis von Sensordaten durchgeführt werden. Die Sensordaten können beispielsweise Bilddaten, Laserdaten, Segmentierungsdaten oder dergleichen umfassen. Der Klassifikator kann beispielsweise einen lernenden Algorithmus umfassen, der dazu ausgestaltet ist, basierend auf den Eingangsdaten Stückgutstrominformation als Ausgangsdaten zu erzeugen. Hierbei können bestimmte Merkmale in den Sensordaten genutzt werden, um auf eine Höhenposition der Stückgüter eines Stückgutstroms zu schließen. Ein solcher Klassifikation kann beispielsweise trainiert werden, um den Klassifikator auf bestimmte Stückgüter eines Stückgutstroms abzustimmen. Bei einem solchen Trainieren können Eingangstrainingsdaten genutzt werden, die beispielsweise Sensorrohdaten umfassen. Die Sensorrohdaten können hierbei Bilddaten eines Vision-Systems umfassen. Ferner können Output -Trainingsdaten genutzt werden, um den Klassifikation zu trainieren. Die Output-Trainingsdaten können hierbei den Bilddaten zugeordnete Höhenpositionen der Stückgüter umfassen. Dadurch kann der Klassifikator so trainiert werden, dass dieser auf Basis von Bilddaten als Eingangsdaten ein Höhenprofil des Stückgutstroms erzeugen kann.

Optional umfassen die Stückgutinformationen Dimensionen der Stückgüter des Stückgutstroms. Mit anderen Worten können die Stückgutinformationen Abmessungen der Stückgüter umfassen. Somit kann ein 3D-Höhenprofil des Stückgutstroms erstellt werden.

Optional umfassen die Stückgutinformationen ein 3D-Höhenprofil der Stückgüter des Stückgutstroms. Somit kann die Topographie des Stückgutstroms bei dem Betrieb der Handhabungsvorrichtung berücksichtigt werden. Ferner können durch die Kenntnis der Dimension der Stückgüter die relative Position der Stückgüter im Stückgutstrom zueinander bestimmt werden und somit bestimmte Anfahrstellungen des Funktionsendes basierend auf den Stückgutstrominformationen individuell bestimmt werden. Liegen beispielsweise mehrere Stückgüter nah beieinander, sodass ein Zielstückgut verdeckt ist, kann das Funktionsende so gesteuert werden, dass ein Stückgut, welches das Zielstückgut verdeckt zuerst weggeschoben wird und anschließend das Zielstückgut kontaktiert wird. Dadurch können auch ungeordnete Stückgutströme gehandhabt werden. Ferner ist es denkbar, dass ein 3D-Bulk gehandhabt werden kann.

Optional umfassen die Stückgutinformationen eine Fördergeschwindigkeit der Stückgüter des Stückgutstroms. Dadurch kann ein Verlagerungsweg des Funktionsendes auch in einem sich bewegenden Stückgutstrom bestimmt werden. Mit anderen Worten kann so bestimmt werden, wie der Stückgutstrom im Handhabungsbereich in der Zukunft ausgestaltet sein wird.

Optional kann das Funktionsende ein daran gehaltenes Zielstückgut während des Greifens drehen. Mit anderen Worten kann die Steuereinheit dazu ausgestaltet sein, das Funktionsende so zu steuern, dass ein an dem Funktionsende gehaltenes Zielstückgut während einer Verlagerung gedreht wird. Die Drehung kann in Abhängigkeit der Zielstückgutinformationen und/oder Stückgutstrominformationen erfolgen. Dadurch können beispielsweise andere Stückgüter des Stückgutstroms so umfahren werden, dass eine Kollision vermieden wird. Wird ein Zielstückgut beispielsweise außermittig an dem Funktionsende gehalten, kann ein benötigter Raum, welcher benötigt wird, um das Zielstückgut von der Greifposition in die Zielposition zu bringen, angepasst, insbesondere verkleinert, werden. Das Drehen des Zielstückguts kann basierend auf den Zielstückgutinformationen und/oder den Stückgutstrominformationen bestimmt werden. Dadurch kann ein Zielstückgut so relativ zu den Stückgütern des Stückgutstroms gedreht und verlagert werden, dass eine Kollision vermieden wird.

Optional kann die Handhabungsvorrichtung dazu ausgestaltet sein, zu bestimmen, ob während eines Greifens des Zielstückguts, das Zielstückgut seine Form verändert. Dies kann beispielsweise durch Messen eines Stroms zum Antrieb der Handhabungsvorrichtung und/oder visuell realisiert sein. Dadurch können etwaige Formänderungen des Zielstückguts während des Greifens berücksichtigt werden. Somit können Zielstückgutinformationen angepasst werden und vermieden werden, dass es bei einer Formänderung eines Zielstückgut nach dem Greifen des selbigen zu Kollisionen mit anderen Stückgütern des Stückgutstroms kommt. So kann es beispielsweise bei Transporttaschen oder dergleichen vorkommen, dass diese ihre Form nach einem Greifen verändern. Basierend auf den angepassten Zielstückgutinformationen (d. h. durch die Formveränderung des Zielstückguts) kann somit der Verlagerungsweg zwischen Greifposition und Zielposition individuell während der Verlagerung angepasst werden. Dadurch können Kollisionen effektiv vermieden werden.

Optional kann die Handhabungsvorrichtung dazu ausgestaltet sein, in einer Greifposition das Funktionsende parallel zu dem Zielstückgut zu bewegen. Mit anderen Worten kann das Funktionsende in einer Greifposition genauso schnell bewegt werden wie das Zielstückgut. Damit kann ein Zielstückgut aus einem sich bewegenden Stückgutstrom herausgegriffen werden. Somit kann ein Zielstückgut aus einem beispielsweise durch ein Förderband geförderten Stückgutstrom herausgepickt werden.

Optional umfassen die Stückgutinformationen eine 2D-Ansicht der Stückgüter des Stückgutstroms. Somit kann ein normales Vision-System genutzt werden, um die Stückgutstrominformationen zu erlangen. Die 2D-Ansicht kann genutzt werden, um Tiefeninformationen des Stückgutstroms zu erlangen. Beispielsweise kann die 2D-Ansicht hierbei genauer ausgewertet werden, um weitere Informationen zu erlangen. So können beispielsweise mehrere Einzelbilder mit unterschiedlichen Schärfepunkten miteinander verglichen werden und somit Tiefeninformationen ("depth by focus") erlangt werden. Ferner kann die 2D-Ansicht zusammen mit anderen Sensordaten wie beispielsweise Abtastdaten (Ultraschall, Laser, LiDAR und dergleichen) genutzt werden, um den 2D-Bildinformationen (d.h. der 2D-Ansicht) weitere räumliche Informationen wie beispielsweise eine Tiefeninformation zuzuweisen. Dadurch kann auf einfache Art und Weise ein Höhenprofil des Stückgutstroms erstellt werden.

Optional ist die Steuereinheit dazu ausgestaltet, die Ruheposition zusätzlich basierend auf einer Vorhersageinformation zu bestimmen. Die Vorhersageinformation kann beispielsweise indikativ dafür sein, wie sich ein Stückgutstrom in naher Zukunft verändern wird. Beim Erstellen der Vorhersageinformation kann beispielsweise ein Zeitpunkt (beispielsweise Tageszeit oder Jahreszeit), ein derzeitiger Stückgutstrom oder weitere Kriterien berücksichtigt werden, um auf einen wahrscheinlichen zukünftigen Stückgutstrom zu schließen. So kann es beispielsweise sein, dass zu einer bestimmten Tageszeit eine bestimmte Lieferung von Stückgütern verarbeitet werden muss. Mit anderen Worten kann die Steuereinheit erlernen, dass zu einer bestimmten Tageszeit ein bestimmtes Stückgutaufkommen vorliegt. Dadurch können sich wiederholende Ereignisse zugrunde gelegt werden, um einen lernenden Algorithmus der Steuereinheit so zu trainieren, dass basierend auf der Tageszeit eine Ruheposition entsprechend gewählt wird. Beispielsweise kann zu einer Tageszeit, an der üblicherweise nur ein geringer Stückgutstrom vorliegt, die Ruheposition deutlich näher an einer Fördereinrichtung gewählt werden, als zu Zeiten, in denen verhältnismäßig viele Stückgüter abgearbeitet werden und damit der Handhabungsbereich mit Stückgütern gefüllt ist. Ferner kann auch die Art der Stückgüter erlernt werden, da oft auf ein bestimmtes Stückgutmuster ein bestimmtes anderes Stückgutmuster folgt. So ist es beispielsweise üblich, dass Ladebrücken häufig zuerst mit großen Stückgütern befüllt werden und anschließend kleinere Stückgüter nachgeladen werden. Somit kann bei einem Entladen darauf geschlossen werden, dass wenn kleine Stückgüter in einem bestimmten Muster vorliegen, es mit überdurchschnittlicher Wahrscheinlichkeit dazu kommen wird, dass daraufhin größere Stückgüter gehandhabt werden müssen. Somit kann die Ruheposition des Funktionsendes entsprechend angepasst werden. Zusammengefasst kann die Steuereinheit mittels eines lernenden Algorithmus verschiedene Muster oder Randbedingungen oder eine Kombination davon erkennen und basierend darauf eine Vorhersageinformation bestimmen. Dadurch kann sich die Handhabungsvorrichtung optimal auf individuelle Vorkommnisse anpassen.

Optional umfassen die Vorhersageinformationen Informationen über einen zu erwartenden Stückgutstrom. Wie bereits oben beschrieben, können die Vorhersageinformationen indikativ für einen zukünftig zu erwartenden Stückgutstrom sein.

Optional können die Zielstückgutinformationen eine Abmessung des zumindest einen Zielstückguts umfassen. Dadurch kann bestimmt werden, wie groß das Zielstückgut zusammen mit dem Funktionsende ist. Mit anderen Worten kann der Platzbedarf für ein an dem Funktionsende gehaltenes Stückgut zusammen mit dem Funktionsende ist. Dadurch kann das Funktionsende zusammen mit dem daran gehalten Zielstückgut so an anderen Stückgütern oder anderen Elementen vorbei manövriert werden, dass eine Kollision vermieden werden, jedoch kein unnötig großer Umweg gefahren werden muss.

Optional kann die Zielstückgutinformation eine Verformung des zumindest einen Zielstückgut zu umfassen. Somit kann basierend auf verschiedenen Stückguteigenschaften eine zu erwartende Verformung durch die Zielstückgutinformationen bekannt sein. Dadurch kann beispielsweise erfasst werden, wie ein Zielstückgut an dem Funktionsende gehalten sein kann. So werden beispielsweise Polybags anders an einem Funktionsende gehalten als relativ dazu feste Kartons. Dadurch kann eine etwaige Verformung des Zielstückguts in einem gegriffenen Zustand berücksichtigt werden und somit entsprechend eine Verlagerung von der Greifposition in eine Zielposition angepasst werden, um Kollisionen zu vermeiden.

Optional können die Zielstückgutinformationen optisch und/oder basierend auf einem Strom der Handhabungsvorrichtung bestimmt werden. Die optische Bestimmung von Zielstückgutinformationen kann wie bereits oben beschrieben durchgeführt werden. So können beispielsweise Zielstückgutinformationen direkt optisch anhand von Bilddaten von dem Zielstückgut erlangt werden. Dies umfasst beispielsweise eine Oberflächenbeschaffenheit, eine Abmessung, eine Form, eine Schwerpunktbestimmung und dergleichen. Durch Berücksichtigung eines Stroms der Handhabungsvorrichtung kann die nötige Kraft bestimmt werden, welche aufgewendet werden muss, um das Zielstückgut anzuheben. Somit kann auf ein Gewicht, ein Massenschwerpunkt und dergleichen geschlossen werden. Diese Zielstückgutinformationen können dann wiederum genutzt werden, um eine Verlagerung des an dem Funktionsende gehaltenen Zielstückguts zu optimieren.

Optional kann das Funktionsende in der Greifposition in Kontakt mit dem zumindest einen Zielstückgut sein. Mit anderen Worten kann in der Greifposition das Funktionsende in direkten Kontakt mit dem Zielstückgut sein. Dadurch ist ermöglicht, dass ein Zielstückgut durch eine Saugvorrichtung, welche an dem Funktionsende angeordnet sein kann, gehandhabt bzw. angesaugt werden kann. Somit kann der Greifprozess sicher realisiert sein.

Optional ist die Steuereinheit dazu ausgestaltet, den Verlagerungsweg des Funktionsendes in Abhängigkeit feststehender Hindernisse im Greifbereich zu bestimmen. Feststehende Hindernisse können beispielsweise Teile der Handhabungsvorrichtung und/oder anderer Elemente, welche beispielsweise zu der Fördererinnen gehören, auf welcher der Stückgutstrom transportiert wird, angepasst werden.

Somit können Kollisionen vermieden werden. Ferner kann durch Berücksichtigung anderer Hindernisse beispielsweise eine Zusammenarbeit mit einem anderen automatisierten Handhabungsgerät oder Personen im Greifbereich realisiert sein. Somit kann die Handhabungsvorrichtung bei einer Zusammenarbeit mit einem menschlichen Nutzer beispielsweise Kollisionen mit diesem vermeiden.

Optional kann sich der Verlagerungsweg in Echtzeit anpassen. Mit anderen Worten kann der Verlagerungsweg des Funktionsendes laufend angepasst werden. Somit können sich ändernde Randbedingungen stets in einer Veränderung des Verlagerungswegs resultieren. Sollte beispielsweise ein nicht zu erwartender Gegenstand oder Objekt in den Greifbereich gelangen, kann der Verlagerungsweg sofort in Echtzeit angepasst werden, sodass eine Kollision vermieden wird. Ferner kann durch unbeabsichtigte Umlagerungen des Stückgutstroms ein ursprünglich angedachter Verlagerungsweg blockiert sein, sodass der Verlagerungsweg angepasst werden muss. Dazu kann die Sensorvorrichtung laufend Sensordaten aufnehmen und entsprechend den Verlagerungsweg anpassen. Dadurch kann ein hochdynamische Vorrichtung geschaffen werden, die sich selbst auf ändernde Randbedingungen anpassen kann.

Optional kann der Verlagerungsweg in Zeitintervallen angepasst werden. So kann beispielsweise alle Zehntelsekunde die Sensorvorrichtung den derzeitigen Stand der Randbedingungen überwachen. Mit anderen Worten können Zielstückgutinformationen und/oder Stückgutstrominformation erfasst werden und basierend darauf ein Verlagerungsweg bestimmt werden. Der neu bestimmte Verlagerungsweg kann dann mit dem bereits bestimmten Verlagerungsweg verglichen werden und bei einer Abweichung, der zuerst bestimmte Verlagerungsweg durch den zuletzt bestimmten Verlagerungsweg ersetzt werden. Dadurch kann eine rechenoptimierte Anpassung des Verlagerungswegs bereitgestellt sein.

Optional kann das Funktionsende zumindest einen Sauggreifer umfassen. Der Sauggreifer hat Vorteile bei Stückgütern mit relativ weicher Oberfläche. Diese können schonend angesaugt und gehandhabt werden.

Optional kann sich die Stückgutstrom zumindest mit 1m/s fortbewegen. Dadurch kann eine hohe Abfertigungsrate von Stückgütern pro Zeiteinheit erreicht werden. Durch die individuelle Steuerung der Handhabungsvorrichtung kann selbst aus einem Stückgutstrom mit zumindest 1m/s Geschwindigkeit zuverlässig Zielstückgüter heraus gepickt werden.

Optional ist die Sensorvorrichtung dazu ausgestaltet, Intensitätsdaten zu erfassen. Intensitätsdaten kann sich bei Bilddaten beispielsweise auf die numerischen Werte, die die Helligkeit oder Lichtintensität eines Pixel in einem Bild repräsentieren, beziehen. Diese Daten können also beschreiben, wie hell oder dunkel ein Pixel ist. Bei monochromen Bildern (beispielsweise Grauwertbildern) kann die Intensität eines Pixels durch einen einzelnen Wert dargestellt werden (beispielsweise 0 = Schwarz, 255 = Weiß bei 8 Bitdarstellungen). Intensitäten können hierbei für eine Lichtmenge stehen, die von jedem Bild reflektiert oder emittiert werden. Bei Farbbildern (beispielsweise RGB-Bilder) gibt es für jedes Pixel Intensitätswerte für die einzelnen Farbkanäle (Rot, Grün, Blau). Die Werte kombinieren sich, um die wahrgenommene Farbe des Pixels zu definieren. Somit können bei einer Bildanalyse und Mustererkennung die Intensitätsdaten analysiert werden, um beispielsweise Kanten, Objekte oder Strukturen in Bildern zu identifizieren. Somit kann er als Stückgutstrom identifiziert werden. Ferner kann somit identifiziert werden, wo ein Stückgut aus dem Stückgutstrom angeordnet ist und welche Kontur es aufweist.

Optional umfasst die Sensorvorrichtung einen LiDAR-Sensor. Ein LiDAR-Sensor ("Light Detection and Ranging") ist ein optisches Messsystem, welches mithilfe von Laserlicht eine Entfernung zu Objekten messen kann und die Umgebung somit als 3D-Punktwolke kartieren kann. Der Sensor kann hierbei Laserimpulse aussenden, die Zeit messen, die das Licht benötigt, um zum Sensor zurückzukehren und basierend darauf die Entfernung messen. Somit kann die Sensorvorrichtung eine Distanz zu Objekten in der Umgebung messen. Durch einen Spiegel kann der Laser so umgelenkt werden, dass ein Umgebungsmessung in einem gewünschten Bereich ermöglicht ist. Ferner können die Intensitätsdaten des LiDAR-Sensors ausgewertet werden, um basierend auf der Stärke des reflektierten Signals Hinweise auf die Materialeigenschaften des reflektierenden Gegenstands (d. h. des Stückguts) zu erheben. LiDAR-Sensor kann eine Punktwolke mit 3D-Koordinaten, X, Y, Z, ausgeben. Dadurch kann mithilfe des LiDAR-Sensors eine 3D-Karte des Stückgutstroms erstellt werden.

Optional kann die Sensorvorrichtung dazu ausgestaltet sein, die Stückgutinformation basierend auf einem Kontrast zu bestimmen, insbesondere durch Segmentierung. Bei der Verarbeitung von Bilddaten basierend auf Kontrast können Bilder in bedeutungsvolle Regionen unterteilt werden. Dabei kann ein Kontrast (beispielsweise Unterschied in Helligkeit oder Farbe zwischen benachbarten Pixeln) als Schlüsselmerkmal genutzt werden. Durch eine kantenbasierte Segmentierung können beispielsweise Kanten detektiert werden. Somit können Stückgüter in ein Stückgutstrom erkannt werden. Hierbei bieten sich Verfahren wie der SOBEL-, KANI- und LAPLACE-Operator als Anwendung an. Nach einer Kantendetektion können benachbarte Pixel mit ähnlichen Eigenschaften gruppiert werden, um Objekte oder Region zu segmentieren. Dadurch kann eine effiziente Objekterkennung bereitgestellt werden.

Optional ist die Sensorvorrichtung dazu ausgestaltet, eine Klassifizierung der Stückgüter des Stückgutstroms durchzuführen und als Stückgutinformation auszugeben. Somit können Stückgutinformationen basierend auf einer zuvor geschehenen Klassifizierung bestimmt werden. So kann beispielsweise eine Stückgutklasse indikativ für eine bestimmte Abmessung von Stückgütern sein. Somit können Stückgüter, die eine ähnliche Größe aufweisen, derselben Klasse zugeordnet werden. Die Stückgutinformationen können indikativ für diese Klasse sein. Dadurch kann die Handhabungsvorrichtung basierend auf den Stückgutinformationen optimal und individuell gesteuert werden. Die Klassifizierung der Stückgüter kann ebenfalls basierend auf weiteren Eigenschaften der Stückgüter, wie Oberflächenbeschaffenheit, geometrischer Schwerpunkt, Massenschwerpunkt, Form, sich ändernde Form usw. bestimmt werden.

Optional ist die Sensorvorrichtung dazu ausgestaltet, ein Höhenprofil der Stückgüter des Stückgutstroms zu erstellen. Basierend auf den erlangten Informationen kann die Sensorvorrichtung bzw. die daran angeschlossene Steuereinheit ein Höhenprofil der Stückgüter des Stückgutstroms erstellen. Dadurch können insbesondere Tiefendaten genutzt werden, um 3D-Informationen des Stückgutstroms zu erlangen. Dadurch kann die Handhabungsvorrichtung so gesteuert werden, dass Kollisionen mit den Stückgüter Stückgutstroms vermieden sind.

Optional kann das Funktionsende dazu ausgestaltet sein, bei einer Verlagerung eine Verlagerungsgeschwindigkeit basierend auf den Stückgutstrominformationen und/oder den Zielstückgutinformationen anzupassen. Dadurch kann eine individuelle Verlagerung des Zielstückguts von der Greifposition in die Zielposition realisiert sein. Beispielsweise kann die Handhabungsvorrichtung eine Verlagerungsgeschwindigkeit verlangsamen, wenn erst ein Stückgut aus dem Stückgutstrom passiert werden lassen soll, bevor das Zielstückgut verlagert wird. Somit kann der optimale Verlagerungsweg realisiert sein, ohne dass unnötige Umwege notwendig sind. Gleichzeitig können Kollisionen mit anderen Stückgüter oder anderen Strukturen vermieden werden. Ferner kann eine Verlagerungsbefindlichkeit auch beschleunigt werden, wenn ein nahendes Stückgut aus dem Stückgutstrom eine Kollision verursachen kann. Insgesamt kann die Verlagerungsgeschwindigkeit also individuell auf die vorliegenden Umstände angepasst werden. Beispielsweise ist auch denkbar, dass die Verlagerungsgeschwindigkeit reduziert wird, wenn das an dem Funktionsende gehaltene Zielstückgut sich bewegt oder andere ungewollte Veränderungen aufzeigt. Dadurch kann eine Beschädigung des Zielstückguts durch die Verlagerung vermieden werden.

Optional kann die Handhabungsvorrichtung eine Räumvorrichtung umfassen, die dazu ausgestaltet ist, basierend auf den Stückgutstrominformationen und/oder den Zielstückgutinformationen Stückgüter des Stückgutstroms zu verlangen. Dies kann beispielsweise hilfreich sein, wenn das Zielstückgut von anderen Stückgütern blockiert ist. In diesem Fall kann die Räumvorrichtung zuerst die störenden Stückgüter zur Seite räumen (beispielsweise verschieben) bevor das Funktionsende das Zielstückgut greifen kann. Dadurch können selbst bei großen und dreidimensionalen angeordneten Stückgütern des Stückgutstroms ein Zielstückgut zuverlässig gegriffen werden. Die Räumvorrichtung kann beispielsweise ein schieberähnliches Gerät sein, welches Stückgüter räumlich verlangen kann. Beispielsweise kann die Räumvorrichtung eine Sauggreifvorrichtung oder eine Schiebevorrichtung umfassen.

Optional kann die Steuereinheit einen lernenden Algorithmus umfassen, der den Verlagerungsweg bestimmen kann. Der lernende Algorithmus kann hierbei basierend auf Eingangstrainingsdaten und Ausgangstrainingsdaten trainiert werden, basierend auf bestimmten Randbedingungen einen bestimmten Verlagerungsweg zu bestimmen. Dadurch kann der lernende Algorithmus auf sich ändernde Randbedingungen trainiert werden. Optional bestimmt die Steuereinheit mittels lernendem Algorithmus einen Verlagerungsweg des Funktionsendes.

Gemäß einem weiteren Aspekt der vorliegenden Erfindung wird ein Handhabungssystem zum Handhaben von Stückgütern bereitgestellt. Das Handhabungssystem kann eine Handhabungsvorrichtung gemäß einer der obigen Ausführungsformen umfassen. Ferner kann das Handhabungssystem eine Fördervorrichtung umfassen, die dazu ausgestaltet ist, Stückgüter der Handhabungsvorrichtung zuzufördern. Die Fördervorrichtung kann beispielsweise ein Förderband sein. Das Förderband kann sich beispielsweise zumindest abschnittsweise durch einen Greifbereich der Handhabungsvorrichtung hindurch erstrecken. Ferner ist es denkbar, dass das Handhabungssystem mehrere Handhabungsvorrichtungen umfasst. Hierbei kann eine Handhabungsvorrichtung beispielsweise dazu dienen, Stückgüter eines Stückgüterstroms so umzulagern, dass ein Zielstückgut durch die zweite Handhabungsvorrichtung gegriffen werden kann. Somit kann die eine Handhabungsvorrichtung dafür sorgen, den Weg für das Funktionsende zu dem Zielstückgut freizuräumen, wohingegen die andere Handhabungsvorrichtung dafür Sorge tragen kann, dass das Zielstückgut aus dem Stückgutstrom entnommen wird.

Gemäß einem weiteren Aspekt der vorliegenden Erfindung wird ein Verfahren zum Entnehmen zumindest eines Zielstückguts aus dem Stückgutstrom bereitgestellt. Das Verfahren kann ein Empfangen und Erfassen von Stückgutstrominformationen umfassen. Ferner kann das Verfahren ein Verlagern eines Funktionsendes basierend auf den Stückgutstrominformationen umfassen, wobei das Funktionsende zwischen einer Ruheposition und einer Greifposition verlagert wird, wobei in der Greifposition das zumindest eine Zielstückgut gegriffen werden kann.

Ausführungsformen und Merkmale können miteinander kombiniert werden und so neue Ausführungsformen bilden. Vorteile und Weiterbildungen, die in Verbindung mit den Ausführungsformen oder den Merkmalen genannt sind, gelten analog auch für die neuen Ausführungsformen. Vorteile und Ausgestaltungen, die in Verbindung mit der Vorrichtung genannt sind, gelten analog auch für das Verfahren und andersherum.

Im folgenden werden Ausführungsformen mit Bezug auf die beigefügten Figuren im Detail beschrieben.
- **Fig. 1**: ist eine schematische perspektivische Ansicht einer Handhabungsvorrichtung gemäß einer Ausführungsform der vorliegenden Offenbarung.
- **Fig. 2**: ist eine schematische Seitenansicht eines Teils der Handhabungsvorrichtung gemäß einer Ausführungsform der vorliegenden Offenbarung.
- **Fig. 3a**: ist eine schematische perspektivische Ansicht einer Vorrichtung aus dem Stand der Technik.
- **Fig. 3b** bis **3d**: sind schematische Seitenansichten einer Ausführungsform gemäß der vorliegenden Offenbarung.
- **Fig. 4**: ist ein schematisches Ablaufdiagramm eines Verfahrens gemäß einer Ausführungsform der vorliegenden Offenbarung.

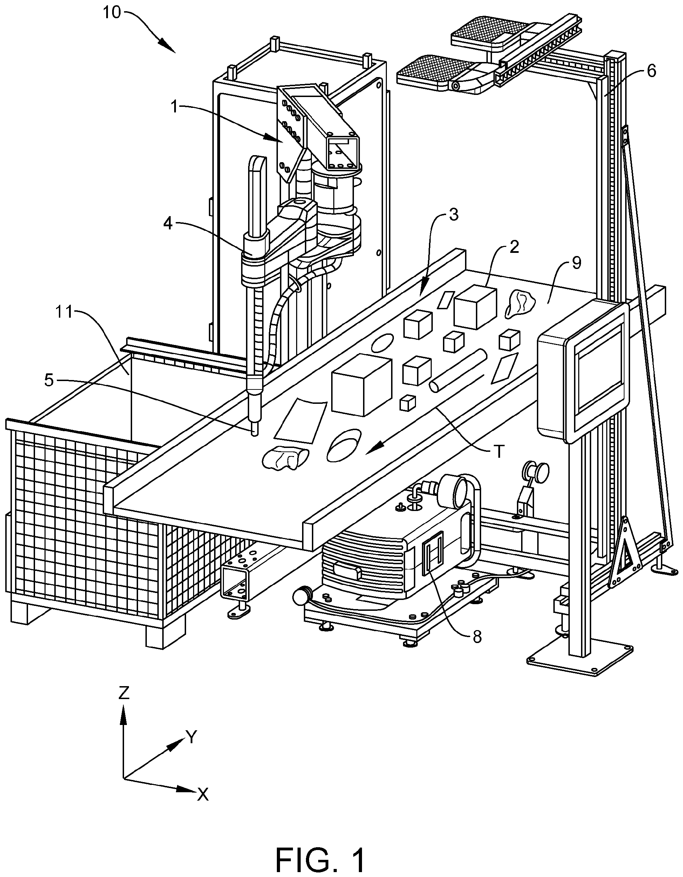

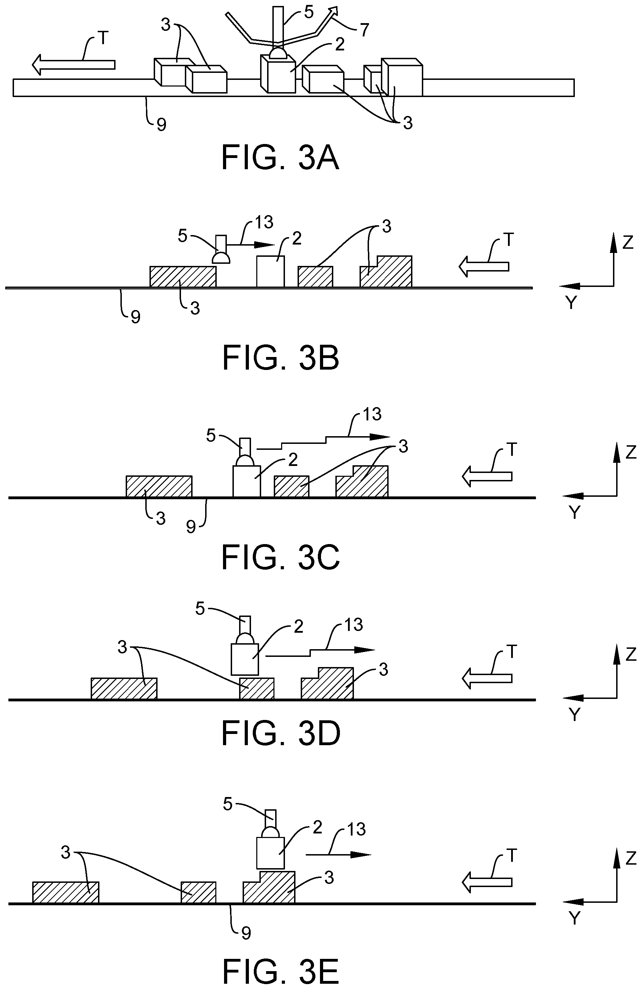

**Fig. 1** ist eine schematische und perspektivische Ansicht eines Handhabungssystems 10 mit einer Handhabungsvorrichtung 1. Die Handhabungsvorrichtung 1 ist bei der vorliegenden Ausführungsform als ein Roboterarm 4 ausgestaltet. Die Handhabungsvorrichtung 1 umfasst ein Funktionsende 5, welches dazu ausgestaltet ist, ein Stückgut zu handhaben. Die Handhabungsvorrichtung 1 weist einen Handhabungsbereich auf, in dem die Handhabungsvorrichtung 1 Stückgüter handhaben kann. Durch den Handhabungsbereich verläuft eine Transportvorrichtung 9. Bei der vorliegenden Ausführungsform ist die Transportvorrichtung 9 ein Förderband, auf dem eine Vielzahl von Stückgütern in Form eines Stückgutstroms 3 in Transportrichtung T transportiert werden. In dem Stückgutstrom 3 befindet sich ein Zielstückgut 2. Das Zielstückgut soll durch die Handhabungsvorrichtung 1 in eine Endstelle 11 überführt werden. Dazu soll das Zielstückgut 2 durch das Funktionsende 5 kontaktiert werden und so verlagert werden, dass das Zielstückgut 2 zuverlässig und effizient der Endstelle 11 zugeführt wird. Der Stückgutstrom 3 umfasst eine Vielzahl von unterschiedlich großer und unterschiedlich beschaffener Stückgüter. Die Handhabungsvorrichtung 1 umfasst eine Sensorvorrichtung 6. Die Sensorvorrichtung 6 ist dazu ausgestaltet, Stückgutinformationen des Stückgutstroms zu erfassen. Bei einer weiteren Ausführungsform kann die Sensorvorrichtung Stückgutstrominformationen durch eine externe Vorrichtung aufnehmen. Mit anderen Worten kann eine externe Vorrichtung die Stückgutstrominformation erfassen und der Sensorvorrichtung 6 zuführen. Die Handhabungsvorrichtung 1 umfasst eine Steuereinheit 8, die dazu ausgestaltet ist, einen Verlagerungsweg 3 (siehe Fig. 3A bis 3D) in Abhängigkeit der Stückgutinformation zu bestimmen. Somit kann ein individuell angepasster Verlagerungsweg 3 bestimmt werden, der durch das Funktionsende 5 beschrieben werden kann, um das Zielstückgut 2 der Endstelle 11 zuzuführen.

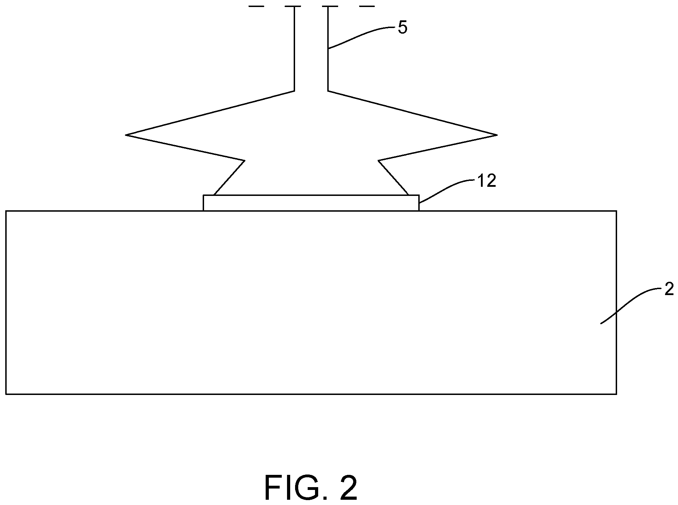

**Fig. 2** ist eine schematische Detailansicht des Funktionsendes 5 der Handhabungsvorrichtung 1 gemäß einer Ausführungsform der vorliegenden Erfindung. In Fig. 2 ist zu erkennen, dass in einer Greifposition das Funktionsende 5 das Zielstückgut 2 kontaktiert. Genauer gesagt kontaktiert des Funktionsende 5 das Zielstückgut 2 mit einer Kontaktfläche 12. Hierdurch kann sichergestellt sein, dass das Zielstückgut 2 zufriedenstellend durch die Handhabungsvorrichtung 1 und speziell durch das Funktionsende 5, kontaktiert wird. Dadurch kann sichergestellt sein, dass das Funktionsende 5 das Zielstückgut zufriedenstellend greifen und halten kann.

**Fig. 3a** ist eine schematische perspektivische Seitenansicht eines Stückgutstroms, welcher auf einer Fördereinrichtung 9 in Transportrichtung T transportiert wird. In dem Stückgutstrom befindet sich ein Zielstückgut 2. Das Zielstückgut 2 soll durch ein Funktionsende 5 verlagert werden. Im Stand der Technik ist es so, dass das Funktionsende 5 in einem großen Bogen 7 an das Zielstückgut herangefahren wird und das Zielstückgut nach oben herausgehoben wird. Genauer gesagt wird das Funktionsende 5 ebenfalls von oben (immer in der Schwererichtung) an das Zielstückgut 2 herangeführt und das Zielstückgut 2 dann ebenfalls in der Vertikalrichtung entnommen. Dies wird unabhängig von anderen Stückgütern in dem Stückgutstrom realisiert. Dadurch entstehen unnötig lange Zykluszeiten, da der Anfahrtsweg und der Abfahrtsweg unnötig lang sind. Vielmehr kann ein individuell angepasster Weg des Handhabungssystems genommen werden, um das Zielstückgut zu handhaben.

Gemäß einer weiteren nicht dargestellten Ausführungsform kann die Sensorvorrichtung 6 auch nur eine Seitenansicht des Stückgutstroms detektieren und damit die Handhabungsvorrichtung steuern. Somit kann ein 2D-Höhenprofil des Stückgutstroms bestimmt werden. Mit anderen Worten kann die Sensorvorrichtung 6 dazu ausgestaltet sein, Stückgutinformationen durch eine Seitenansicht zu erlangen.

**Figuren 3b** bis **3d** beschreiben eine Ausführungsform der vorliegenden Offenbarung. In **Fig. 3b** ist zu erkennen, dass das Funktionsende 5 auf einem Zufahrtsweg zwischen einer Ruheposition und einer Greifposition ist. Genauer gesagt soll das Funktionsende 5 das Zielstückgut 2 aus dem Stückgutstrom 3 herausgreifen. Das Funktionsende wird hierbei gerade so hoch in der Vertikalrichtung angehoben, dass es über ein Stückgut aus dem Stückgutstrom 3 vorbeifahren kann, ohne des Stückgut zu kontaktieren. In **Fig. 3c** ist das Funktionsende 5 in der Greifposition angelangt und kontaktiert das Zielstückgut 2. Hierbei wird das Zielstückgut 2 angesaugt. Anschließend wird das Zielstückgut 2 angehoben und entlang eines Abfahrtswegs 13 bewegt. In **Fig. 3c** ist zu erkennen, dass das Zielstückgut zusammen mit dem Funktionsende lediglich so hoch in der Vertikalrichtung angehoben wird, wie nötig, um das Zielstückgut über daran angrenzende Stückgüter aus dem Stückgutstrom 3 anzuheben. In **Fig. 3d** ist zu erkennen, dass das Zielstückgut 2 zusammen mit dem Funktionsende 5 erneut in der Vertikalrichtung angehoben wird, um das Zielstückgut 2 zusammen mit dem Funktionsende über ein weiteres Stückgut aus dem Stückgutstrom anzuheben. Zu erkennen ist, dass die Stückgüter lediglich soweit angehoben werden, wie nötig ist, um das Zielstückgut über andere Stückgüterstückgutstroms 3 hinwegzuheben. Dadurch kann zum einen Energie eingespart werden, da die Zielstückgüter nicht unnötig in der Vertikalrichtung bewegt werden müssen und zum anderen kann eine Verlagerung des Zielstückgut schneller erfolgen.

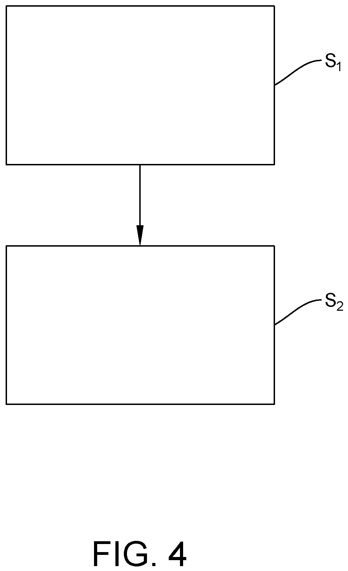

**Fig. 4** ist ein schematisches Ablaufdiagramm eines Verfahrens gemäß einer Ausführungsform der vorliegenden Offenbarung. Das Verfahren umfasst in Schritt S1 ein Empfangen oder Erfassen von Stückgutinformationen. In Schritt S2 wird ein Funktionsende basierend auf der Stückgutinformation verlagert, wobei das Funktionsende 5 zwischen einer Ruheposition einer Greifposition verlagert wird, wobei der Greifposition das zumindest eine Zielstückgut gegriffen werden kann.

### Bezugszeichenliste:

- 1: Handhabungsvorrichtung
- 2: Zielstückgut
- 3: Stückgutstrom
- 5: Funktionsende
- 6: Sensorvorrichtung
- 7: Verlagerungsweg aus dem Stand der Technik
- 8: Steuereinheit
- 9: Transportvorrichtung
- 10: Handhabungssystem
- 11: Endstelle
- 12: Kontaktfläche
- 13: Verlagerungsweg

## Patentansprüche

1. Handhabungsvorrichtung (1) zum Handhaben eines Zielstückguts (2), insbesondere zum Entnehmen zumindest eines Zielstückguts (2) aus einem Stückgutstrom (3), umfassend:
ein Funktionsende (5), das dazu ausgestaltet ist, in einem Greifbereich zumindest ein Zielstückgut (2) zu greifen, wobei das Funktionsende (5) zwischen einer Ruheposition und einer Greifposition verlagerbar ist, wobei in der Greifposition das zumindest eine Zielstückgut (2) gegriffen werden kann,
eine Sensorvorrichtung (6), die dazu ausgestaltet ist, Stückgutstrominformationen des Stückgutstroms (3) zu erlangen oder zu erfassen,
eine Steuereinheit (8), die dazu ausgestaltet ist, einen Verlagerungsweg (7) des Funktionsendes (5) in Abhängigkeit der Stückgutstrominformationen zu bestimmen.

2. Handhabungsvorrichtung (1) gemäß Anspruch 1, wobei die Steuereinheit (8) dazu ausgestaltet ist, die Ruheposition auf Basis der Stückgutinformation zu bestimmen.

3. Handhabungsvorrichtung (1) gemäß einem der vorhergehenden Ansprüche, wobei die Ruheposition variabel ist.

4. Handhabungsvorrichtung (1) gemäß einem der vorhergehenden Ansprüche, wobei die Sensorvorrichtung (6), dazu ausgestaltet ist, Zielstückgutinformationen zu erlangen oder zu erfassen, und
wobei die Steuereinheit (8) dazu ausgestaltet ist, den Verlagerungsweg (7) des Funktionsendes (5) in Abhängigkeit der Zielstückgutinformationen und/oder Stückgutstrominformationen zu bestimmen.

5. Handhabungsvorrichtung (1) gemäß einem der vorhergehenden Ansprüche, wobei die Stückgutstrominformationen eine Position der Stückgüter des Stückgutstroms (3) umfassen.

6. Handhabungsvorrichtung (1) gemäß einem der vorhergehenden Ansprüche, wobei die Stückgutstrominformationen ein 3D-Höhenprofil der Stückgüter des Stückgutstroms (3) umfassen.

7. Handhabungsvorrichtung (1) gemäß einem der vorhergehenden Ansprüche, wobei die Steuereinheit (8) dazu ausgestaltet ist, die Ruheposition zusätzlich basierend auf einer Vorhersageinformation zu bestimmen.

8. Handhabungsvorrichtung (1) gemäß einem der vorhergehenden Ansprüche, wobei das Funktionsende (5) dazu ausgestaltet ist, bei einer Verlagerung des Funktionsende (5) mit dem zumindest einen Stückgut von der Greifposition in die Zielposition, das zumindest ein Stückgut (2) zu drehen.

9. Handhabungsvorrichtung (1) gemäß einem der vorhergehenden Ansprüche, wobei die Handhabungsvorrichtung (1) dazu ausgestaltet ist, zu bestimmen, ob während eines Greifens des Zielstückguts (2), das Zielstückgut (2) seine Form verändert.

10. Handhabungsvorrichtung (1) gemäß einem der vorhergehenden Ansprüche, wobei die Handhabungsvorrichtung (1) dazu ausgestaltet ist, in einer Greifposition das Funktionsende (5) parallel zu dem Zielstückgut (2) zu bewegen.

11. Handhabungsvorrichtung (1) gemäß einem der vorhergehenden Ansprüche, wobei das Funktionsende (5) dazu ausgestaltet ist, bei einer Verlagerung eine Verlagerungsgeschwindigkeit basierend auf den Stückgutstrominformationen und/oder den Zielstückgutinformationen anzupassen.

12. Handhabungsvorrichtung (1) gemäß einem der vorhergehenden Ansprüche, wobei die Handhabungsvorrichtung (1) eine Räumvorrichtung umfasst, die dazu ausgestaltet ist, basierend auf den Stückgutstrominformationen und/oder den Zielstückgutinformationen Stückgüter des Stückgutstroms (3) zu verlagern.

13. Handhabungsvorrichtung (1) gemäß einem der vorhergehenden Ansprüche, wobei die Steuereinheit (8) mittels lernendem Algorithmus einen Verlagerungsweg (7) des Funktionsendes (5) bestimmt.

14. Handhabungssystem (10) zum Handhaben von Stückgütern, umfassend eine Handhabungsvorrichtung (1) gemäß einem der vorhergehenden Ansprüche, und
eine Fördervorrichtung, die dazu ausgestaltet ist, Stückgüter der Handhabungsvorrichtung (1) zu fördern.

15. Verfahren zum Entnehmen zumindest eines Zielstückguts (2) aus einem Stückgutstrom (3), insbesondere mit einer Handhabungsvorrichtung (1) gemäß einem der Ansprüche 1 bis 13, umfassend:
Empfangen oder Erfassen von Stückgutstrominformationen,
Verlagern eines Funktionsendes (5) basierend auf den Stückgutstrominformationen, wobei das Funktionsende (5) zwischen einer Ruheposition und einer Greifposition verlagert wird, wobei in der Greifposition das zumindest eine Zielstückgut (2) gegriffen werden kann.
